# EUROPÄISCHE PATENTANMELDUNG

(11) **EP 1 325 935 A2**
(43) Veröffentlichungstag der Anmeldung: **09.07.2003**
(21) Anmeldenummer: 02028435.2
(22) Anmeldetag: 01.01.2003
(51) Int. Cl.: C08F 226/02, A61K 47/32

(54) **Verwendung von Copolymeren auf Basis von N-Vinyl-N'-Saccharidharnstoffmonomeren und von Polyvinylamiden für die Kultivierung von Stammzellen**

(30) Priorität: 07.01.2002 DE 10200327
(71) Anmelder: Institut für Technologie der Kohlenhydrate - Zuckerinstitut - E.V., 38106 Braunschweig (DE)
(72) Erfinder: Ansorge, Siegfried Prof. Dr., 39291 Hohenwarthe (DE)
(74) Vertreter: Einsel, Martin

(57) **Zusammenfassung**

Die vorliegende Erfindung betrifft die Verwendung von Copolymeren auf Basis von Vinylharnstoffsaccharidmonomeren mit wasserlöslichen Vinylverbindungen als Comonomeren sowie Polyvinylacetamid zur Optimierung der klonogenen Kapazität von Stammzellen, Verfahren zur Herstellung dieser Substanzen sowie neuartige Copolymere auf Basis von Vinylharnstoffsaccharidmonomeren.

## Beschreibung

Die vorliegende Erfindung betrifft die Verwendung eines N-Vinyl-N'-Saccharidharnstoff-Copolymers und von bestimmten Polyvinylamiden für die Kultivierung von Stammzellen, insbesondere von hämopoetischen (blutbildenden) Stammzellen zur Steigerung der klonogenen Kapazität dieser Zellen sowie Verfahren zur Herstellung der erfindungsgemäß eingesetzten Substanzen für die Kultivierung von Stammzellen und neuartige Copolymere auf Basis von Vinylharnstoffsaccharidmonomeren.

Der Kultivierung von Stammzellen außerhalb des Körpers kommt im Hinblick auf die therapeutischen Möglichkeiten, insbesondere bei der Krebsbehandlung, große Bedeutung zu.

Es hat sich gezeigt, dass eine Vielzahl von Tumoren insbesondere auf hochdosierte Chemo- und Strahlentherapien anspricht, so dass eine möglichst erfolgreiche Behandlung den Einsatz einer Hochdosistherapie erforderlich macht.

Von Nachteil ist jedoch, dass in Folge derartiger Hochdosistherapien nicht nur die Tumorzellen absterben, sondern auch körpereigene Zellen, insbesondere Zellen des blutbildenden Systems, zerstört werden.

Durch Isolation von Stammzellen und *ex vivo -* Vermehrung besteht im Rahmen der Stammzell-Transplantation die Möglichkeit, das durch die Hochdosistherapie zerstörte Blutbildungssystem vollständig zu regenerieren. Hierzu ist es notwendig, Blutstammzellen zu isolieren, zu charakterisieren und *ex vivo* zu vermehren.

Für die Charakterisierung und Vermehrung sind an sich geeignete Medien bekannt. Wesentlich ist hierbei, die Teilung der Stammzellen zu bewirken, ohne dass diese sich dabei differenzieren, was den Verlust der pluripotenten Eigenschaften bedeuten würde.

Üblicher Weise wird zur Vermehrung dieser Stammzellen ein zweistufiges Verfahren eingesetzt, das eine Kurzzeit-Kultivierung und eine Langzeit-Kultivierung umfasst.

Das Ziel der Kurzzeit-Kultivierung ist das Auffinden sowie die Initiation der Proliferation naiver Stammzellen, die noch sämtliche Blutzellsysteme ausbilden können. Die Identifizierung dieser Zellen erfolgt hierbei an Hand der Morphologie der Wachstumskolonien.

Hierzu wird in einem Stammzell-Differenzierungs-Assay (colony forming unit, CFU) in einem wässrigen Kulturmedium höherer Viskosität, das unter anderem Methylzellulose und diverse Wachstumsfaktoren enthält, ein Milieu geschaffen, das der *in vivo*-Umgebung ähneln soll.

Ähnlich wie im Knochenmark sind die Stammzellen durch die hohe Viskosität des Mediums lokal fixiert. Die durch Teilung gebildeten Tochterzellen bleiben bei der Mutterzelle, so dass autokrine Wachstumsfaktoren die Tochterzellen zur richtigen Zeit in der geeigneten Konzentration erreichen können. Die Stammzellen werden so stabilisiert und das Wachstum initiiert.

In der zweiten Stufe, der Langzeitkultivierung, wird ein Expansions-Assay (longterm culture initiating cells, LTC-IC) eingesetzt, wobei flüssige Spezialmedien verwendet werden, die eine möglichst optimale Vermehrung der Blutstammzellen gewährleisten. Diese sind zusammengesetzt aus Basalmedien, die mit speziellen Pferdeseren, fetalen Kälberseren, Inositol, Folsäure, Mercaptoethanol, Glutamin und Cortison versetzt sind. Derartige Medien sind an sich bekannt und zum Beispiel bei Sutherland, HJ: Proc. Natl. Acad. Sci USA 1990; 87:3584; Eaves, CJ: J. Tissue Culture Meth. 1991; 13:55-62; Petzer; AL: Proc. Natl. Acad. Sci USA 1996; 93: 1470-1474 beschrieben.

Diese beinhalten neben Basalmedien Methyzellulose, fetales Kälberserum, Mercaptoethanol und Glutamin, für die Entwicklung und das Wachstum von Stammzellen notwendige Faktoren, wie Stammzellfaktor (SCF), Granulozyten-Monozyten-Kolonie stimulierende Faktoren wie GM-CSF sowie Zytokine wie IL-3. Beispiele für CFU-Medien sind zum Beispiel beschrieben in Bernstein, ID: Blood 1991; 77:2316-2321; McNiece, IK: Exp. Hematol. 1991; 19:226-231 und Eaves, CJ: Blood 1978; 52:1196-1210.

Ziel dieser zweistufigen Kultivierung ist es, eine möglichst große Anzahl an generationsfähigen Zellen im Verhältnis zur Anzahl der eingesetzten Stammzellen zu erhalten. Dieses Verhältnis wird als Klonierungsindex bezeichnet. Unter üblichen Standardbedingungen wird ein Klonierungsindex von etwa 1:4, d.h. etwa 0,25, erhalten. Dies bedeutet, dass auf vier eingesetzte naive Stammzellen ein naiver Klon (Tochterzelle) gebildet wird.

In den letzten Jahren wurden zahlreiche Versuche unternommen, die klonogene Kapazität von Stammzellen in diesen Medien zu verbessern. Von besonderem Interesse waren dabei Zytokine und andere Wachstumsfaktoren, die rekombinant hergestellt werden können. Beispiele hierfür sind insbesondere Interleukin (IL) 6, Flt-3-Ligand und Thrombopoietin. Weiterhin wurde der Zusatz von LDL-Fraktionen (low density lipoprotein) etabliert. Eine Beschreibung derartiger zur Verbesserung der klonogenen Kapazität eingesetzten Substanzen findet sich in Zandstra, PW: 1997; Proc. Natl. Acad. Sci USA 94:4698; Mayani, H: Blood 1993; 81:3252, Mayani, H: Blood 1993; 82:2664; Mayani, H: Exp. Hematol. 1995;23:1453; Conneally, E: Proc. Natl. Acad. Sci USA 1997; 94:9836; Bhatia, M: J. Exp. Med. 1997; 186:619.

Im Hinblick auf die große Bedeutung von Stammzellen, insbesondere Blutstammzellen, für die Therapie ist es wünschenswert, die klonogene Kapazität von Kultivierungsmedien für Stammzellen weiter zu verbessern.

Bei den vorstehend beschriebenen Substanzen zur Optimierung von Blutstammzellkulturen handelt es sich um Proteinstrukturen. Von Nachteil ist hierbei, dass die Zufuhr von Proteinstrukturen im Allgemeinen und der genannten potenten zellulären Botenstoffe im Besonderen die Homöostase (das dynamische Gleichgewicht) des menschlichen Organismus und dessen zellulärer Bestandteile beeinflusst und damit eine Belastung für den Organismus darstellt.

Überraschenderweise wurde nun gefunden, dass durch Zusatz von Substanzen wie Copolymeren auf Basis von N-Vinyl-N'-Saccharidharnstoffmonomeren und von Polymethylvinylacetamid der Klonierungsindex von Kulturmedien für Stammzellen und damit die klonogene Kapazität dieser Medien gesteigert werden kann.

Aus EP 0 383 023 sind N'-Saccharid-N'-Alkylharnstoffderivate mit C4 bis C21 Alkyl und Verfahren zur Herstellung dieser Derivate bekannt. Weiter wird vorgeschlagen, diese Derivate als Monomere für Homo- und Copolymere zu verwenden. Als Beispiel wird die Copolymerisation von N-Ethylmethylacrylato-N',N'octyldesoxymaltit-Harnstoff mit Acrylamid genannt.

EP 0 450 628 beschreibt Saccharid-modifizierte wasserlösliche Proteine, wobei ein Proteinkovalent über einen Saccharidrest an ein Poly(vinylsaccharid) gebunden ist sowie Verfahren zur Herstellung dieser Substanzen.

Es ist bekannt, dass Polymethylvinylacetamid bestimmte Enzyme, wie Tyrosin-Aminotransferase und Glutamat-Dehydrogenase, beeinflussen kann (Chemical Abstracts, Band 116, 1992, Seite 267 Nr. 168, 127j und Band 117, 1992, Seiten 429 und 430, Nr. 198343q).

In DE 2 422 904 ist die Anwendung von niedermolekularen Polymethylvinylacetamid in Arzneimittelzubereitungen beschrieben.

Weiter ist bekannt, vernetztes Polymethylvinylacetamid oder ein Copolymer davon als festes Kulturmedium für Mikroorganismen einzusetzen (Patent Abstracts of Japan, Vol. 96, Nr. 7 zu JP 95 19468). Das dort beschriebene Polymethylvinylacetamid ist auf Grund der Vernetzung wasserunlöslich.

Die Herstellung von Polyvinylamiden wie Polymethylvinylacetamid, sowie Copolymeren davon, erfolgt üblicher Weise mittels radikalischer Polymerisation in organischen Lösungsmitteln, wie n-Butanol, Dioxan, Toluol und Benzol, mit einem geeigneten Initiator, z.B. AIBN (Pashkin I.I. et al. "Synthesis of watersoluble N-Vinyl-Caprolactam-based Copolymers and Physicochemical properties of their aqueous solutions" Polymer Science, Reihe A, Bd. 35, Nr. 5, 1993, Seiten 581-584).

Es war Aufgabe der vorliegenden Erfindung, Substanzen zur Verfügung zu stellen, die die Effizienz von Stammzellkulturen, insbesondere Blutstammzellkulturen, steigern können, und zudem möglichst keinen Einfluss auf die Homöostase des menschlichen Organismus aufweisen.

Weiter war es Aufgabe der Erfindung vorteilhafte Verfahren zur Herstellung dieser Substanzen zur Verfügung zu stellen.

Die erfindungsgemäße Aufgabe wird gelöst durch die Verwendung von Copolymeren auf Basis von N-Vinyl-N'-Saccharidharnstoffmonomeren und von Poly-N-vinylacetamid als Mittel zur Erhöhung der klonogenen Kapazität von Stammzellen.

Ein weiterer erfindungsgemäßer Aspekt betrifft neuartige Copolymere auf Basis von N-Vinyl-N'-Saccharidharnstoffmonomeren mit mindestens einer N-Vinylverbindung, ausgewählt unter N-Vinylamin, Acrylamid und Methacrylamid als weiterem Monomer.

Gemäß einem weiteren Aspekt der vorliegenden Erfindung wird ein Verfahren zur Herstellung von Polymethylvinylacetamid zur Verfügung gestellt, wonach die Polymerisation in wässriger Lösung durchgeführt werden kann.

Die erfindungsgemäßen Copolymere auf Basis von N-Vinyl-N'-Saccharidharnstoffmonomeren werden erhalten durch Polymerisation von N-Vinyl-N'-Saccharidharnstoffmonomeren mit der folgenden allgemeinen Formel I: 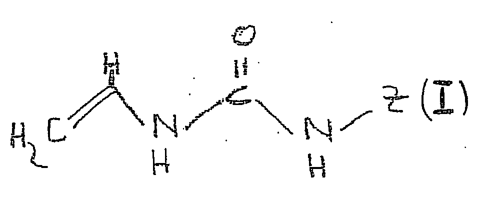 wobei Z für ein Mono-, Di- oder Oligo-Saccharid steht.

Als weiteres Monomer wird eine Vinylverbindung, ausgewählt unter einem N-Vinylamin, einschließlich N-Vinylamid, Acrylamid und Methacrylamid eingesetzt.

Die Vinylverbindung kann substituiert oder unsubstituiert sein, wobei die Substituenten so zu wählen sind, dass die resultierende Vinylverbindung in einem geeigneten Lösungsmittel für die Polymerisation mit dem N-Vinyl-N'-Saccharidharnstoffderivat löslich ist. Üblicher Weise wird für die Polymerisation Wasser als Lösungsmittel verwendet. Entsprechend sind wasserlösliche Vinylverbindungen als weitere Monomere bevorzugt.

Besonders bevorzugt sind N-Vinylaminverbindungen mit -NRR' mit R = H, niederes Alkyl mit C1 bis C3 und R' = niederes Alkyl mit C1 bis C3 oder - C(O)(CH₂)₁ H mit I = 0, 1, 2. Erfindungsgemäß sind als wasserlösliche Comonomere Acrylamid und Methylvinylacetamid besonders bevorzugt.

Das erfindungsgemäße Copolymer kann auch zwei oder mehrere verschiedene Vinylverbindungen als Comonomereinheit und/oder ein oder mehrere verschiedene N-Vinyl-N'-Saccharidharnstoffderivate enthalten.

Die erfindungsgemäß bevorzugten Copolymere auf Basis von N-Vinyl-N'saccharidharnstoffmonomeren können durch folgende allgemeine Formel II dargestellt werden:

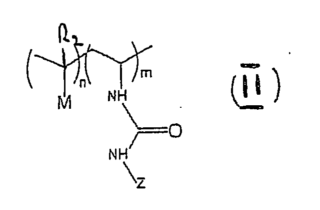

In dieser Formel bedeutet M den Rest der Vinylverbindung als Comonomer, z.B. die folgenden Reste: - C(O)NH₂ für Acrylamid oder Methacrylamid und - NRR' mit R und R' wie verstehend beschrieben für N-Vinylamin, wobei R₂ = H oder Methyl; n und m sind positive ganze Zahlen mit vorzugsweise (n + m) ≥100 und m kleiner n.

Z bedeutet den Saccharid-Rest eines Mono-, Di- oder Oligo-Saccharids mit 3 bis 6, insbesondere 3 bis 4, Monomer-Einheiten.

Beispiele für geeignete Saccharide, wie sie erfindungsgemäß eingesetzt werden können, sind Laktose, Maltose, Saccharose, Glukose, Galaktose, Manose, Isomaltose, Isomaltolose und Cellobiose. Erfindungsgemäß bevorzugt sind die Disaccharide, wie insbesondere Laktose, Maltose und Saccharose, wobei Saccharose insbesonders bevorzugt ist.

Beispiele für bevorzugte Saccharid-Komponenten ausgewählt unter Laktose, Maltose und Saccharose sind in den folgenden Formeln Va) bis Vc) gezeigt:

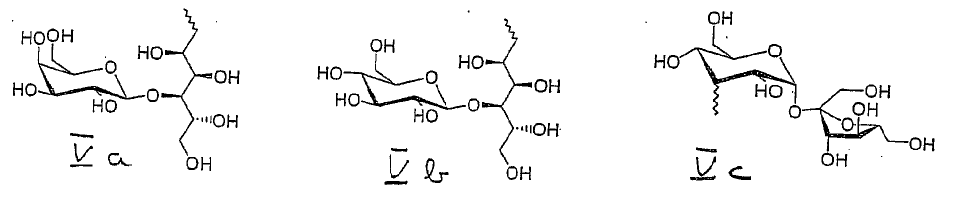

Als für die Verwendung zur Steigerung der klonogenen Kapazität von Blutstammzellen besonders geeignet haben sich Copolymere der folgenden Formel III erwiesen, mit N-Vinyl-N'-Desoxy-Saccharitol-Harnstoff und Acrylamid (AAm) bzw. Methylvinylacetamid (MVAA) als Comonomer gemäß der folgenden Formel: 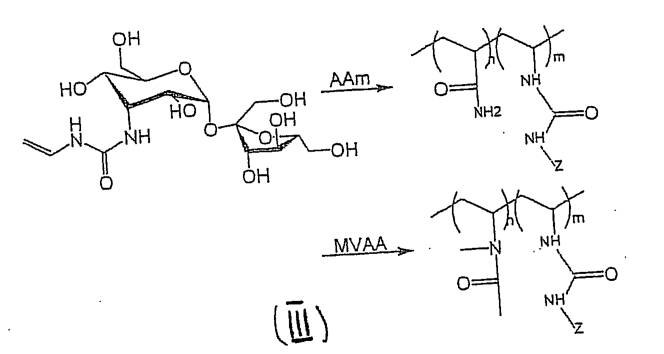 mit Z = Saccharose.

Besonders günstig für die Erhöhung des Klonierungsindexes haben sich Copolymere auf Basis von N-Vinyl-N'-Saccharidharnstoffmonomeren erwiesen, die eine vergleichsweise niedrige Saccharid-Einbauquote (Saccharidharnstoffmonomer (Saccharidharnstoffmonomer + Comonomer)) aufweisen, wobei eine Einbauquote von weniger als 20 %, insbesondere von weniger als 10 %, besonders vorteilhaft ist.

Die molare Masse des erfindungsgemäßen Copolymers, bezogen auf das Gewichtsmittel, zur Verwendung zur Steigerung der klonogenen Kapazität von Stammzellen sollte 100 000 oder mehr betragen. Als Trend wurde festgestellt, dass die Wirkung des Copolymers zur Steigerung der klonogenen Kapazität mit Erhöhung der molaren Masse verbessert werden kann, so dass erfindungsgemäß insbesondere molare Massen von 1 000 000 und mehr bevorzugt sind.

Eine erfindungsgemäß bevorzugte Kombination für ein Copolymer enthält Acrylamid als Comonomer und Disaccharid, insbesondere Saccharose, als Saccharidbestandteil.

Bei den erfindungsgemäßen Copolymeren auf Basis von N-Vinyl-N'-Saccharidharnstoffmonomeren handelt es sich um statistische Polymere, die prinzipiell durch radikalische Polymerisation der entsprechenden N-Vinyl-N'-Saccharitol-Harnstoffverbindungen mit der weiteren Vinylverbindung bzw. Vinylverbindungen hergestellt werden können.

Hierfür kann von Aminopolyolen ausgegangen werden, die aus reduzierenden Zuckern zugänglich sind. Die Position der Carbonylgruppe bzw. später der Aminogruppe, definiert damit die Stellung der späteren Harnstoffgruppe. Derartige Verfahren, wie sie prinzipiell zur Herstellung der erfindungsgemäßen Copolymere auf Basis von N-Vinyl-N'-Saccharidharnstoffderivaten eingesetzt werden können, sind zum Beispiel in den zuvor diskutierten europäischen Patenten EP 0 450 628 und 0 383 032 beschrieben.

Für die Herstellung des N-Vinyl-N'-Saccharitol-Harnstoffmonomers werden an sich bekannte Reaktionsmechanismen eingesetzt, wobei z.B. ein vinylsubstituiertes Isocyanat mit einem Saccharid-Rest umgesetzt wird, bei dem an der für die Substitution gewünschten Position eine Aminofunktion eingebracht worden ist.

Ein entsprechendes Reaktionsschema ist nachstehend beispielhaft für Saccharose als Saccharid-Bestandteil dargestellt:

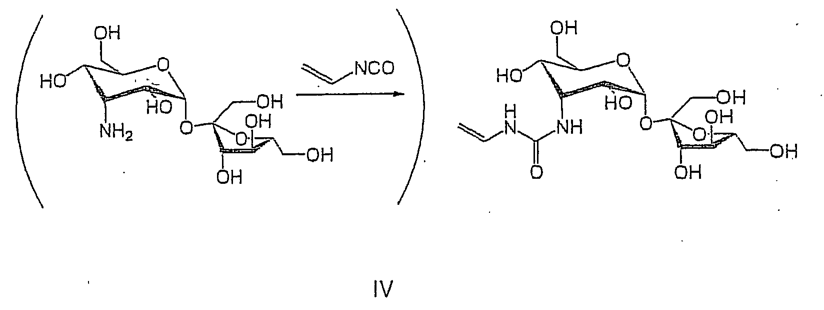

Die Umsetzung des erhaltenen N-Vinyl-N'-Saccharidharnstoffmonomeren mit dem weiteren Comonomer zu dem gewünschten Copolymer kann mittels radikalischer Polymerisation in wässriger Lösung mit einem Initiator, der für das jeweilige Comonomer geeignet ist, erfolgen. Beispielsweise hat sich für Comonomere auf Basis von Acrylamiden das Redox-System ((NH₄)₂ S₂O₈/Na₂S₂O₂O₅) und für Comonomere auf Basis von Vinylaminen ein wasserlöslicher Azo-Initiator wie er unter der Bezeichnung VA-044 von der Firma Wako vertrieben wird, erwiesen.

Gemäß einer weiteren Ausführungsform der vorliegenden Erfindung hat sich als Substanz zur Steigerung der klonogenen Kapazität von Stammzellen Poly-Methylvinylacetamid als geeignet erwiesen.

Besonders effektiv hat sich ein verzweigtes hochmolekulares Homopolymer gezeigt, wie es zum Beispiel mittels Substanzpolymerisation erhalten werden kann.

Lineare Homopolymere können prinzipiell durch die an sich bekannte radikalische Polymerisation in organischen Lösungsmitteln erhalten werden.

Überraschender Weise hat sich jedoch gezeigt, dass die Polymerisation erfolgreich in einem wässrigen System durchgeführt werden kann, sofern als Initiator ein wasserlöslicher Azo-Initiator eingesetzt wird, wie z.B. VA044 der Firma WAKO.

Besonders effektiv hat sich die Verwendung von verzweigten hochmolekularen Homopolymeren von Methylvinylacetamid erwiesen. Auch hier hat sich gezeigt, dass die Wirkung mit Zunahme der molaren Masse verbessert werden kann. Die molare Masse (bezogen auf das Gewichtsmittel) sollte daher 100 000 und mehr betragen, wobei insbesondere Homopolymere mit einer molaren Masse von 1 000 000 und mehr bevorzugt sind.

Geeignete verzweigte Methylvinylacetamid-Homopolymere lassen sich mittels Substanzpolymerisation in der flüssigen Monomer-Phase unter Verwendung eines geeigneten Initiators erhalten. Beispielsweise kann auch für die Substanzpolymerisation ein Azo-Initiator, wie AIBN, eingesetzt werden.

Im Gegensatz zu vernetzten Homopolymeren, die wasserunlöslich sind, sind die erfindungsgemäß eingesetzten verzweigten Polymethylvinylacetamid-Homopolymere wasserlöslich und entsprechend filtrierbar. Es wird vermutet, dass dies darauf zurückzuführen ist, dass bei vernetzten Homopolymeren zahlreiche Verbindungen zwischen den einzelnen Hauptsträngen des Polymers bestehen, die offensichtlich bei den verzweigten Vertretern fehlen bzw. insgesamt weniger Vernetzungen vorliegen.

Für den Einsatz zur Steigerung der klonogenen Kapazität von Stammzellen werden die erfindungsgemäßen Substanzen, einzeln oder in Kombination, einem an sich bekannten Kulturmedium für die Kultivierung von Stammzellen in wirksamer Menge zugesetzt.

Die jeweils einzusetzende Menge kann nach Art des verwendeten Kulturmediums und der jeweils gewünschten Stammzellen variieren.

Beispielsweise liegen geeignete Mengen für Blutstammzellen in einem Bereich von 0,1 mg/ml bis 10 mg/ml und insbesondere 01, bis 2 mg/ml.

Die erfindungsgemäßen Substanzen steigern nicht nur in vorteilhafter Weise die klonogene Kapazität von Stammzellen, insbesondere Blutstammzellen, sondern ein weiterer Vorteil ist, dass es sich hierbei um Verbindungen handelt, die nicht auf einer Proteinbasis beruhen, wie die eingangs erwähnten Substanzen zur Optimierung von Stammzellenkulturen, so dass von einer bedeutend geringeren Neben- und Wechselwirkungsrate im Hinblick auf die Homöostase ausgegangen werden kann. Zudem können nachteilige Interaktionen, wie sie beim Einsatz von Proteinstrukturen während Expansion und Differenzierung *ex vivo* auftreten, vermieden werden.

Nachstehend wird die vorliegende Erfindung an Hand von konkreten Beispielen veranschaulicht.

### 1. Herstellung eines Vinylharnstoffsaccharid-Copolymers mit Acrylamid (AAm) bzw. Methylvinylacetamid (MVAA) als Comonomer.

Die Polymerisation wurde in einem mit Stickstoff durchspülten, thermostatisierbaren Glasreaktor mit Magnetrührer durchgeführt. Die Monomere wurden in dem Reaktor in destilliertem, entgastem Wasser gelöst. Anschließend wurde eine Stunde lang Stickstoff durch die Lösung geleitet.

Bei Copolymerisationen mit MVAA wurde die Saccharidkomponente unmittelbar vor der Polymerisation als Feststoff zugegeben.
Gestartet wurden die Polymerisationen durch die Injektion der Initiatorlösungen.

Abhängig von den Monomeren wurde entweder ein Redox-System ((NH₄)₂ S₂O₈/Na₂ S₂ O₅) für Copolymere mit Acrylamid bzw. der wasserlösliche Azo-Initiator Wako VA-044 für die Copolymere mit MVAA gewählt.

Polymerisiert wurde in Wasser bei 30°C für die Copolymere mit AAm und bei 60°C für die Copolymere mit MVAA.

Die Poymerisation wurde durch Einspritzen von Luft abgebrochen.
Zum Entfernen niedermolekularer Oligomere wurde etwa eine Woche lang gegen destilliertes Wasser dialysiert mit einem Zelluloseacetatdialyseschlauch mit Ausschlussgrenze 12.000 bis 14.000 Dalton der Firma Medicell, London. Nach der Dialyse wurden die Polymere filtriert und gefriergetrocknet.
Es wurden weiße, watteartige Feststoffe gewonnen.

In der nachstehenden Tabelle sind beispielhafte Reaktionsbedingungen für ausgewählte Beispiele der erfindungsgemäßen Copolymere dargestellt:

| **Polymer** | **Rkt.** **Volumen** **[ml]** | **M**_{**1**} **(Comonomer)** **[g]** | **M**_{**2**} **(Saccarid)** **[g]** | **C**_{**init**} **[Mol%]** | **Rkt-Zeit** **[h]** |
|---|---|---|---|---|---|
| AAm/Vic-Lac(10)-0.1 | 270 | 7,76 | 5 | 0,1 | 24 |
| AamNic-Sac(10)-1 | 40 | 1,17 | 0,75 | 1 | 24 |
| MVAA/VIC-Lac(10)-1 | 60 | 2,16 | 1 | 1 | 24 |

In der Tabelle wurde zur Bezeichnung der Copolymere folgende Nomenklatur verwendet:
M1/M2 (C_{M2})-Ini, es bedeutet
M1= Comonomer
M2= Saccharidmonomer
C_{M2}= Anteile der Saccharidkomponente in der Vorlage [Mol%]
Ini= Initiatorkonzentration [Mol%].

Für die Polymerisation von Methylvinylacetamid wurde 2,2'-Azobis[2-(2-lmidazolin-2-yl)propan]dihydrochlorid (VA-044), ein wasserlöslicher Azo-Initiator der Firma WAKO verwendet.

### 2. Herstellung von Polymethylvinylacetamid

### 2a. Polymerisation von MVAA in wässriger Lösung

Die Polymerisation wurde in einem mit Stickstoff durchspülten thermostatisierbaren Glasreaktor mit Magnetrührer durchgeführt. 10g (101mmol) frisch destilliertes Methylvinylacetamid wurden in 200 ml destilliertem entgastem Wasser gelöst. Anschließend wurde eine Stunde lang Stickstoff durch die Lösung geleitet und die Temperatur auf 60°C erhöht. Gestartet wurde die Polymerisation durch Zugabe von 32mg (0,1mmol) des wasserlöslichen Azo-Initiators Wako VA-044.

Die Polymerisation wurde nach 48 Stunden abgebrochen.
Zum Entfernen niedermolekularer Oligomere wurde etwa eine Woche lang gegen destilliertes Wasser mit einem Zelluloseacetat-Dialyseschlauch mit Ausschlussgrenze 12.000 bis 14.000 Dalton der Firma Medicell, London dialysiert. Nach der Dialyse wurden die Polymere filtriert und gefriergetrocknet.
Das Produkt wurde als weißer watteartiger Feststoff gewonnen.

### 2b. Substanzpolymerisation von MVAA

Die Polymerisation wurde in einem mit Stickstoff durchspülten, thermostatisierbaren Glasreaktor mit Magnetröhre durchgeführt, 3,4g (33,9mmol) frisch destilliertes Methylvinylacetamid wurden vorgelegt und auf 60°C erwärmt. Anschließend wurde eine Stunde lang Stickstoff durch die Flüssigkeit geleitet. Gestartet wurde die Polymerisation durch Hinzufügen von 5,6mg (0,1Mol%) AIBN.
Nach kurzer Zeit wurde die Reaktionslösung fest, dennoch wurde die Temperatur noch ca. drei Tage beibehalten. Das Produkt wurde in heißem Wasser gelöst und zum Entfernen niedermolekularer Oligomere etwa 14 Tage lang gegen destilliertes Wasser mit einem Zelluloseacetat-Dialyseschlauch mit Ausschlussgrenze 12.000 bis 14.000 Dalton der Firma Medicell, London dialysiert.
Nach der Dialyse wurden die Polymere filtriert und gefriergetrocknet.
Das Produkt wurde als weißer watteartiger Feststoff erhalten.

### 3. Verwendung der erfindungsgemäßen Substanzen zur Erhöhung des Klonierungsindexes von pluripotenten hämopoetischen Stammzellen.

Der Einfluss der erfindungsgemäßen Substanzen auf die klonogene Kapazität hämopoetischer Stammzellen wurde unter Verwendung speziell adaptierter Stammzell-Assays bestimmt.
Hierbei kamen ein methylzellulose gestützter Assay zur Definition kolonieformierender Stammzellklone der leukozytären Differenzierungsreihe (CFU/CFU-GMM: colony forming unit for lymphocytes / granulocytes and myelo-monocytic cells) sowie ein darauf aufbauender Langzeit-Assay zur Bestimmung der Generationsfähigkeit der leukozytären Stammzellen (LTC-IC: Long-term culture-initiating cells) zur Anwendung.

Hämopoetische Stammzellen wurden aus dem peripheren Blut gesunder Spender mit hoher Reinheit (>95%) isoliert und in den genannten Assay-Systemen in Gegenwart der Testsubstanzen über einen Zeitraum von 9 für CFU/CFU-GMM bzw. 40 Tagen für LTC-IC kultiviert.

Als Kontrolle diente jeweils eine Serie von Vergleichansätzen ohne Zusatz der erfindungsgemäßen Testsubstanzen.
Jede Substanz wurde in vier voneinander unabhängigen Präparationsansätzen unterschiedlicher Spender mit jeweils achtfacher interner Replikation (N=32) geprüft.
Die Auswertung erfolgte ab der Initialisierung der jeweiligen Kultur bis zum 10. Tag täglich, danach in einem Intervall von 48 Stunden.

Als Parameter für die Klonierung, Proliferation und Generationsfähigkeit wurde die Anzahl und die Morphologie der jeweiligen Stammzellkolonien bewertet.

Die Testsubstanzen wurden in einer Konzentration von 1mg/ml den jeweiligen Stammzellkulturmedien zugesetzt.

### 3a. Untersuchung der klonogenen Aktivität von Copolymeren auf

Basis von Vinylharnstoffsacharidmonomeren am Beispiel von AAm/Vic-Sac(10)-1

Die initiale Kolonieformierung hämopoetischer Stammzellen war in Gegenwart von AAm-Vic-Sac(10)-1 ab dem vierten Tag gegenüber den Kontrollkonturen ohne Testsubstanz deutlich vermehrt. Dieser Trend war bis zum Ende des CFU-Assays zu verfolgen.
Nach 9 Tagen war die Kolonieformierung in den Assays mit AAm/Vic-Sac(10)-1 signifikant erhöht. Dieser klonogene Effekt war statistisch zu sichern mit p<0,05.

In der Langzeitkultur nach dem zehnten Kultivierungstag sowie im weiteren Beobachtungszeitraum über 40 Tage war die Generationsfähigkeit von Stammzellen bei Zugabe von AAm/Vic-Sac(10)-1 ebenfalls erheblich verbessert. Eine statistische Sicherung war auf den 5% Niveau möglich.
Der Klonierungsindex (Zahl der generationsfähigen Zellen im Verhältnis zur Zahl der eingesetzten Stammzellen) betrug nach 40 Tagen LTC-IC etwa 0,54. Er zeigte damit eine deutliche Verbesserung gegenüber den Kontrollkonturen mit einem Index von lediglich etwa 0,28.
Damit konnte für die erfindungsgemäße Substanz eine deutliche Steigerung der klonogenen Kapazität insbesondere bei der initialen HSC-Formierung generationsfähiger Stammzellen belegt werden.

### 3b. Untersuchung der klonogenen Aktivität von durch Substanzpolymerisation hergestelltem PMVAA.

Im CFU-Assay zeigt sich zwar innerhalb der ersten vier Kultivierungstage eine leicht verringerte Klonierungseffizienz gegenüber den Kontrollkulturen, jedoch kehrte sich diese Tendenz ab dem fünften Tag um und am Ende des CUF-Assays nach 9 Tagen wurden die Werte der Kontrollkulturen erreicht bzw. sogar leicht überschritten.

In der Langzeitkultur zeigte sich jedoch ein deutlicher klonogener Effekt. So war gegenüber den Kontrollkulturen die Zahl generationsfähiger Stammzellen in Gegenwart von PMVAA mit einem Klonierungsindex (nach 40 Tagen) von etwa 0,76 signifikant vermehrt (p<0,01).

Die Verwendung von PMVAA zeigte damit insbesondere für die Langzeitkultur eine deutliche Steigerung der Klonierungseffizienz generationsfähiger Stammzellen, während nur ein geringer Effekt auf die Initialisierung der Stammzellkulturen eintrat.

## Patentansprüche

1. Copolymer auf Basis von N-Vinyl-N'-Saccharidharnstoffmonomeren gemäß der allgemeinen Formel I 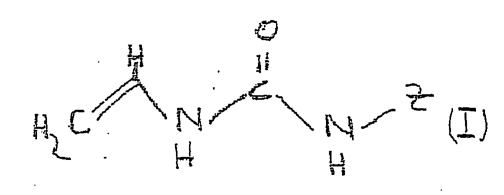 mit Z=Saccharidrest,
und einer Vinylverbindung als weiterem Monomer, ausgewählt unter einem N-Vinylamin, Acrylamid und Methacrylamid.

2. Copolymer nach Anspruch 1,
**dadurch gekennzeichnet,**
**dass** die N-Vinylaminverbindung ein unsubstituiertes oder substituiertes N-Vinylamid ist.

3. Copolymer nach Anspruch 1,
**dadurch gekennzeichnet,**
**dass** das N-Vinylamid Methylvinylacetamid ist.

4. Das Copolymer nach einem der Ansprüche 1 bis 3,
**dadurch gekennzeichnet,**
**dass** das Copolymer durch die allgemeine Formel 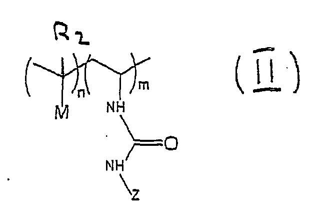 dargestellt ist, wobei Z = Saccharid-Rest ausgewählt unter Mono-, Di-, Oligosacchariden;
M ein Rest C(O)NH₂ oder -NRR' mit R = H, niederes Alkyl mit C 1 bis C 3,
R' = niederes Alkyl mit C 1 bis C 3 oder -C(O) (CH₂)₁H mit I = 0, 1, 2 und n
und m positive ganze Zahlen mit (m + n) ≥100 und m kleiner n sind und R₂ = H oder Methyl.

5. Das Copolymer nach einem der Ansprüche 1 bis 4,
**dadurch gekennzeichnet,**
**dass** die Saccharid-Komponente ausgewählt ist unter Laktose, Maltose, Saccharose, Glukose, Galaktose, Manose, Isomaltose, Isomaltolose und Cellubiose.

6. Das Copolymer nach Anspruch 5,
**dadurch gekennzeichnet,**
**dass** die Saccharid-Komponente ausgewählt ist unter Laktose, Maltose und Saccharose gemäß den folgenden Formeln Va bis Vc

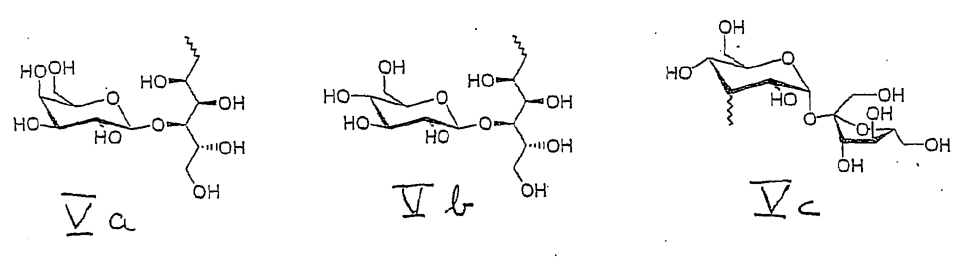

7. Das Copolymer nach einem der vorhergehenden Ansprüche,
**dadurch gekennzeichnet,**
**dass** das Copolymer durch folgende Formel 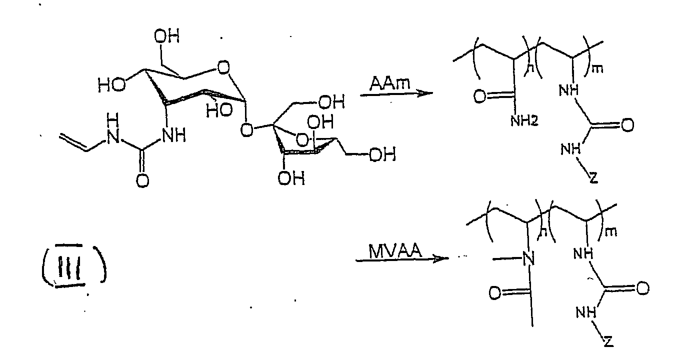 dargestellt ist, mit Z = Saccharose-Rest.

8. Verfahren zur Polymerisierung von N-Vinylamiden mittels radikalischer Polymerisation,
**dadurch gekennzeichnet,**
**dass** die Polymerisation in einem wässrigen System unter Verwendung eines wasserlöslichen Azo-Initiators durchgeführt wird.

9. Verfahren nach Anspruch 8,
**dadurch gekennzeichnet,**
**dass** der wasserlösliche Azo-Initiator 2,2'-Azobis[2-(2-imidazolin-2-yl) propan] dihydrochlorid) ist.

10. Verwendung einer Substanz, ausgewählt unter einem Copolymer auf Basis von N-Vinyl-N'-Saccharidharnstoffmonomeren gemäß einem der Ansprüche 1 bis 7, verzweigtem Polymethylvinylacetamid und Kombinationen davon, zur Optimierung der klonogenen Kapazität von Stammzellen.

11. Verwendung nach Anspruch 10,
**dadurch gekennzeichnet,**
**dass** die Stammzellen Blutstammzellen sind.

12. Verfahren zur Herstellung eines Copolymers nach einem der Ansprüche 1 bis 7,
**dadurch gekennzeichnet,**
**dass** ein N-Vinyl-N'-Saccharidharnstoffmonomer und mindestens eine N-Vinylverbindung als weiteres Monomer, ausgewählt unter N-Vinylaminen einschließlich N-Vinylamiden, Methacrylamid und Acrylamid mittels radikalischer Polymerisation polymerisiert werden.
